# EUROPÄISCHE PATENTSCHRIFT

(11) **EP 2 655 292 B1**
(45) Veröffentlichungstag und Bekanntmachung des Hinweises auf die Patenterteilung: **21.02.2018**
(21) Anmeldenummer: 11810888.5
(22) Anmeldetag: 14.12.2011
(51) Int. Cl.: C04B 35/195, C04B 35/626, C04B 41/89, C04B 41/00, C04B 41/52, F24C 15/10, C04B 111/00

(54) **VERFAHREN ZUR HERSTELLUNG EINER HAUSGERÄTEPLATTE UND HAUSGERÄTEVORRICHTUNG MIT EINER HAUSGERÄTEPLATTE**
METHOD FOR PRODUCING A DOMESTIC APPLIANCE PLATE AND DOMESTIC APPLIANCE DEVICE HAVING A DOMESTIC APPLIANCE PLATE
PROCÉDÉ DE FABRICATION D'UNE PLAQUE D'APPAREIL ÉLECTROMÉNAGER ET DISPOSITIF D'APPAREIL ÉLECTROMÉNAGER COMPRENANT UNE PLAQUE D'APPAREIL ÉLECTROMÉNAGER

(30) Priorität: 21.12.2010 ES 201031893 P
(43) Veröffentlichungstag der Anmeldung: 30.10.2013
(73) Patentinhaber: BSH Hausgeräte GmbH, 81739 München (DE); SOCIEDAD ANONIMA MINERA CATALANO-ARAGONESA (SAMCA), 44547 Arino Teruel (ES)
(72) Erfinder: BUÑUEL MAGDALENA, Miguel Angel, E-50017 Zaragoza (ES); CABALLERO LÓPEZ, Miguel Angel, E-50001 Zaragoza (ES); EJARQUE ESTEVE, Sara, E-50001 Zaragoza (ES); ESTER SOLA, Francisco Javier, E-50001 Zaragoza (ES); FERNANDEZ LOZANO, Jose Francisco, E-28049 Madrid (ES); FERRANDO MOLINOS, Fidel, E-50001 Zaragoza (ES); GARCIA JIMENEZ, Jose-Ramon, E-50009 Zaragoza (ES); MARTIN GOMEZ, Damaso, E-20012 Zaragoza (ES); PLANAS LAYUNTA, Fernando, E-50009 Zaragoza (ES)
(86) Internationale Anmeldenummer: PCT/IB2011/055659
(87) Internationale Veröffentlichungsnummer: WO 2012/085763

(56) Entgegenhaltungen:
- WO-A1-2009/053271
- DE-A1-102009 011 790
- DE-B3-102006 035 928
- DE-C1- 10 242 481
- US-A- 4 634 841
- US-A- 6 077 796
- Ubolrat Wangrakdiskul, Seksit Laophet, Karawuth Wairawang: "Effect of Calcind Kaolin Material on Cordierite Properties", IE Network Conference 2008, 20-22 October 2008 , 17. August 2009 (2009-08-17), Seiten 16-21, XP002671187, Faculty of Engineering Prince of Songkla University Thailand Gefunden im Internet: URL:http://www.ie.psu.ac.th/ienet_2008/pap ers/ienetwork2008/paper/OR/OR_009.pdf [gefunden am 2012-03-09]

## Beschreibung

Die Erfindung geht aus von einem Verfahren zur Herstellung einer Hausgeräteplatte nach dem Oberbegriff des Anspruchs 1.

Es ist bei Glaskeramik-Hausgeräteplatten bekannt, diese aus einer Ausgangsmischung herzustellen, welche in einem geschmolzenen Zustand eine Glasschmelze bildet.

Aus der deutschen Patentschrift DE 10 2006 035 928 B3 ist bereits ein Keramikstab zum Einsatz in einem Stabthermostat für Kochfelder bekannt, wobei der Keramikstab ein Längen/Durchmesserverhältnis von mehr als 10:1 aufweist. Zudem sind aus der genannten Patentschrift ein Stabthermostat mit einem oder mit dem Keramikstab sowie ein Verfahren zur Herstellung eines oder des Keramikstabs bekannt. Es wird ein Keramikstab zum Einsatz in einem Stabthermostat für Kochfelder vorgeschlagen, wobei der Keramikstab ein Längen / Durchmesserverhältnis von mehr als 10:1 aufweist und wobei der Keramikstab im Querschnitt senkrecht zu seiner Längserstreckung zwei parallele Seitenwände aufweist und/oder liegend gepresst hergestellt wurde.

Die internationale Patentanmeldung WO 2009/053271 A1 betrifft eine Platte aus Glas oder Keramik und ein Tragbauteil, wobei die Platte eine Oberseite und eine der Oberseite gegenüberliegende Unterseite umfasst, und wobei in die Unterseite wenigstens eine Ausnehmung zur Befestigung eines Tragbauteils eingearbeitet ist. Die Ausnehmung ist zumindest teilweise durch Laserbearbeitung in das Material der Platte eingearbeitet.

Aus der US-Druckschrift US 4,634,841 ist bereits eine Keramikabdeckung für ein Kochherd-Element bekannt. Die Keramikabdeckung für ein Kochherd-Element weist die Form einer flachen Platte auf, mit einer abwärts gerichteten, das Heizelement eng umschließenden Umrahmung. Eine praktische Zusammensetzung umfasst etwa 40 % Ton, 25 % Talkum, 35 % Lignit und kleine Mengen von Lignitrückständen und Dextrin.

Die deutsche Patentschrift DE 102 42 481 C1 betrifft ein keramisches Kochsystem mit einer großflächigen, monolitischen, die gesamte Kochmulde abdeckenden Kochfläche mit einzelnen ausgewiesenen Kochzonen. Es ist vorgesehen, dass die Kochfläche aus einer niedrig dehnenden Sinterglaskeramik besteht, die mindestens 90%, vorzugsweise mindestens 92% der Hauptkristallphase Cordierit enthält.

Die Aufgabe der Erfindung besteht insbesondere darin, eine Hausgeräteplatte mit einer hohen Thermoschockbeständigkeit, einer guten Wärmeisolation und vorteilhaften mechanischen Eigenschaften bereitzustellen. Die Aufgabe wird erfindungsgemäß durch ein Verfahren gemäß dem Patentanspruch 1 und eine Hausgerätevorrichtung gemäß dem Patentanspruch 6 gelöst. Vorteilhafte Ausgestaltungen und Weiterbildungen der Erfindung können den Unteransprüchen entnommen werden.

Die Erfindung geht aus von einem Verfahren zur Herstellung einer Hausgeräteplatte aus einer Ausgangsmischung.

Es wird vorgeschlagen, dass für die Ausgangsmischung zumindest Magnesiumsilikathydrat, Kaolinit, kalzinierter Kaolinit und reines Aluminiumoxid verwendet werden. Unter einer "Ausgangsmischung" soll insbesondere eine Mischung von Ausgangsstoffen für ein Produkt verstanden werden. Vorzugsweise liegen die Ausgangsstoffe in Form eines Pulvers und/oder eines Granulats vor. Unter "kalziniertem Kaolinit" soll insbesondere ein Material verstanden werden, das bei einem Brennen von Kaolinit bei zumindest 1000°C entsteht. Insbesondere ist das Material entwässert und umfasst Aluminiumoxid und Siliciumdioxid. Unter "Aluminiumoxid" soll insbesondere eine chemische Verbindung aus zwei Aluminiumatomen und drei Sauerstoffatomen verstanden werden. Unter "reinem Aluminiumoxid" soll Aluminiumoxid in seiner Reinform verstanden werden. Unter einer "Reinform" eines Stoffs soll eine den Stoff enthaltende Stoffmischung verstanden werden, bei der der Stoff einen Massenanteil von mindestens 85%, insbesondere von zumindest 90% und besonders vorteilhaft von wenigstens 95% umfasst. Vorzugsweise wird in der Ausgangsmischung Magnesiumsilikathydrat mit einem Massenanteil in einem Bereich von 30% bis 50% verwendet. Vorzugsweise wird in der Ausgangsmischung Kaolinit mit einem Massenanteil in einem Bereich von 10% bis 20% verwendet. Vorzugsweise wird in der Ausgangsmischung kalzinierter Kaolinit mit einem Massenanteil in einem Bereich von 0% bis 12% verwendet. Vorzugsweise wird in der Ausgangsmischung, insbesondere zusätzlich zu dem in den übrigen Ausgangsstoffen der Ausgangsmischung enthaltenen Aluminiumoxid, reines Aluminiumoxid mit einem Massenanteil in einem Bereich von 10% bis 20% verwendet. Durch eine solche Ausgestaltung kann eine Hausgeräteplatte mit einer hohen Thermoschockbeständigkeit, einer guten Wärmeisolation und vorteilhaften mechanischen Eigenschaften geschaffen werden. Des Weiteren kann eine kostengünstige Hausgeräteplatte bereitgestellt werden, insbesondere im Vergleich zu einer Hausgeräteplatte aus einer Glaskeramik. Ferner kann bei Verwendung der Hausgeräteplatte als Kochfeldplatte in einem Kochfeld, insbesondere in einem Induktionskochfeld, im Vergleich zu einer Kochfeldplatte aus einer Glaskeramik Energie eingespart werden, da eine Wärmeleitfähigkeit der erfindungsgemäßen Hausgeräteplatte geringer ist. Hierdurch kann ferner ein zusätzlicher Wärmeeintrag von heißem Gargeschirr auf unterhalb der Kochfeldplatte angeordneten elektronischen Komponenten des Kochfelds reduziert werden, so dass durch einen geringeren Kühlbedarf eine weitere Kostensenkung ermöglicht wird. Durch ein keramisches Aussehen der Hausgeräteplatte können neue Designmöglichkeiten eröffnet werden. Insbesondere kann eine Anpassung des Aussehens an Küchenmöbel vorgenommen werden.

Ferner wird vorgeschlagen, dass für die Ausgangsmischung zusätzlich Ball Clay zu einer Erhöhung einer Plastizität verwendet wird. Unter "Ball Clay" soll insbesondere ein sedimentärer plastischer Ton verstanden werden, der Kaolinit mit einem Massenanteil von 20% bis 80%, Glimmer mit einem Massenanteil von 10% bis 25% und Quarz mit einem Massenanteil von 6% bis 65% aufweist. Vorzugsweise wird in der Ausgangsmischung Ball Clay mit einem Massenanteil in einem Bereich von 10% bis 20% verwendet. Hierdurch kann eine folgende Extrusion vereinfacht werden.

Für die Ausgangsmischung wird zusätzlich hochreiner synthetischer Cordierit verwendet. Unter "Cordierit" soll insbesondere ein Mineral aus der Mineralklasse der Silikate verstanden werden. Unter "hochreinem synthetischem Cordierit" soll künstlich hergestellter Cordierit verstanden werden, der mit einem Massenanteil von zumindest 90%, insbesondere von wenigstens 95%, vorzugsweise von mindestens 98% und besonders vorteilhaft von zumindest 99,9% eine Cordierit-Kristallphase umfasst. Unter einer "Cordierit-Kristallphase" soll insbesondere eine Kristallphase des Cordierits verstanden werden, insbesondere eine orthorhombische und/oder eine pseudohexagonale Kristallphase. Vorzugsweise enthält der hochreine synthetische Cordierit Eisen mit einem Massenanteil von höchstens 5%, insbesondere von maximal 1 % und besonders vorteilhaft von höchstens 0,1%. Vorzugsweise wird in der Ausgangsmischung hochreiner synthetischer Cordierit mit einem Massenanteil von höchstens 15% verwendet. Hierdurch können Keime für ein Kristallwachstum einer Cordierit-Kristallphase in die Ausgangsmischung eingebracht werden.

In einer weiteren Ausgestaltung der Erfindung wird vorgeschlagen, dass für die Ausgangsmischung zusätzlich Cordierit Schamotte und/oder Aluminiumtitanat und/oder Farbmittel verwendet werden. Unter "Cordierit Schamotte" soll insbesondere ein künstlich hergestelltes und Cordierit und Aluminiumoxid umfassendes Material verstanden werden, welches Aluminiumoxid mit einem Massenanteil in einem Bereich von 10% bis 45% aufweist. Unter einem "Farbmittel" soll insbesondere eine farbgebende Substanz verstanden werden, insbesondere ein Farbstoff und vorzugsweise ein Pigment. Unter einem "Farbstoff" soll insbesondere ein in einem Anwendungsmedium lösliches Farbmittel verstanden werden. Unter einem "Pigment" soll insbesondere ein in einem Anwendungsmedium unlösliches Farbmittel verstanden werden. Vorzugsweise werden in der Ausgangsmischung Cordierit Schamotte und/oder Aluminiumtitanat mit einem Massenanteil von höchstens 15% verwendet. Besonders vorteilhaft werden in der Ausgangsmischung hochreiner synthetischer Cordierit und/oder Cordierit Schamotte und/oder Aluminiumtitanat mit einem Massenanteil von höchstens 15% verwendet. Vorzugsweise werden in der Ausgangsmischung Farbmittel, insbesondere Pigmente und vorzugsweise natürliche Pigmente, mit einem Massenanteil von höchstens 5% verwendet. Hierdurch können eine Thermoschockbeständigkeit und/oder eine Wärmeisolation der Hausgeräteplatte besonders vorteilhaft erhöht werden. Durch eine Zugabe von Farbmitteln können vorteilhafte optische Effekte erzielt werden. Insbesondere kann leicht auf spezielle Kundenwünsche hinsichtlich einer Farbgebung eingegangen werden. Des Weiteren kann ein Wiedererkennungswert eines Hausgeräts gesteigert werden.

Ferner wird vorgeschlagen, dass die Ausgangsmischung zu einer homogenen Paste geknetet wird. Vorzugsweise wird die Ausgangsmischung unter Zugabe von Wasser zu einer homogenen Paste geknetet. Hierdurch kann eine Hausgeräteplatte mit möglichst homogenen Eigenschaften geschaffen werden.

In einer besonders bevorzugten Ausgestaltung der Erfindung wird vorgeschlagen, dass die homogene Paste zu einer Rohplatte extrudiert wird. Darunter, dass "die homogene Paste zu einer Rohplatte extrudiert wird", soll insbesondere verstanden werden, dass die homogene Paste durch eine formgebende Öffnung gepresst und auf eine gewünschte Länge zugeschnitten wird, um so eine Form der Rohplatte anzunehmen. Vorzugsweise wird die Rohplatte horizontal und mit Unterstützung eines Vakuums extrudiert. Vorzugsweise wird die Rohplatte mit einer Dicke von 2 mm bis 5 mm extrudiert. Hierdurch kann auf eine automatisierbare und zuverlässige Weise eine schnelle Formgebung der Rohplatte erzielt werden.

Das Verfahren umfasst wenigstens einen Sintervorgang. Unter einem "Sintervorgang" soll insbesondere ein Umformverfahren verstanden werden, bei dem Bestandteile der Rohplatte durch Erwärmung miteinander verbunden werden. Vorzugsweise wird die Rohplatte zu einer Entfernung von Wasser vor dem Sintervorgang getrocknet. Vorzugsweise wird die Rohplatte bei einer Temperatur nahe einem Schmelzpunkt des Cordierits gesintert, insbesondere bei einer Temperatur in einem Bereich von 1200°C bis 1400°C. Vorzugsweise findet der Sintervorgang in einer oxidierenden Atmosphäre statt. Vorzugsweise findet der Sintervorgang während einer Zeit von mindestens 2 h statt. Vorzugsweise findet der Sintervorgang während einer Zeit von höchstens 8 h statt. Vorzugsweise findet gleichzeitig mit der Sinterung auch eine Kalzinierung der Rohplatte statt. Hierdurch kann eine Bildung einer Cordierit-Kristallphase in der Rohplatte initiiert werden.

Ferner wird eine Hausgerätevorrichtung mit einer erfindungsgemäßen Hausgeräteplatte, insbesondere einer Kochfeldplatte, vorgeschlagen, die durch ein erfindungsgemäßes Verfahren hergestellt ist. Unter einer "Hausgeräteplatte" soll insbesondere eine Baueinheit verstanden werden, die dazu vorgesehen ist, in einem betriebsbereiten Zustand wenigstens eine weitere Baueinheit eines Hausgeräts, insbesondere zumindest eine Heizeinheit, und/oder einen Funktionsraum eines Hausgeräts, insbesondere einen Garraum, abzudecken, vorzugsweise nach außen hin abzudecken. Unter "vorgesehen" soll insbesondere speziell ausgelegt und/oder ausgestattet verstanden werden. Hierdurch kann eine kostengünstige Hausgeräteplatte mit einer hohen Thermoschockbeständigkeit, einer guten Wärmeisolation und vorteilhaften mechanischen Eigenschaften geschaffen werden. Des Weiteren kann eine Hausgeräteplatte mit verschiedensten Farben geschaffen werden.

In einer bevorzugten Ausgestaltung der Erfindung wird vorgeschlagen, dass die Hausgeräteplatte einen Massenanteil von 12% bis 16% Magnesiumoxid, 30% bis 35% Aluminiumoxid und 52% bis 57% Siliciumdioxid aufweist. Hierdurch können eine hohe Thermoschockbeständigkeit, eine gute Wärmeisolation und vorteilhafte mechanische Eigenschaften ermöglicht werden.

In einer besonders bevorzugten Ausgestaltung der Erfindung wird vorgeschlagen, dass die Hausgeräteplatte zu einem wesentlichen Teil aus einer Cordierit-Kristallphase besteht. Darunter, dass die Hausgeräteplatte "zu einem wesentlichen Teil aus einer Cordierit-Kristallphase besteht", soll insbesondere verstanden werden, dass ein Massenanteil von wenigstens 90%, insbesondere von mindestens 95%, vorzugsweise von zumindest 98% und besonders vorteilhaft von wenigstens 99,9% aus einer Kristallphase des Cordierits besteht. Hierdurch können eine hohe Thermoschockbeständigkeit, eine gute Wärmeisolation und vorteilhafte mechanische Eigenschaften sichergestellt werden.

Vorteilhaft weist die Hausgeräteplatte eine Dichte zwischen 1,8 g/cm³ und 2,4 g/cm³ auf. Vorzugsweise weist die Hausgeräteplatte eine Dichte zwischen 1,9 g/cm³ und 2,4 g/cm³ auf. Hierdurch kann eine Hausgeräteplatte geschaffen werden, die im Vergleich zu einer Hausgeräteplatte aus einer Glaskeramik leichter ist.

Ferner wird vorgeschlagen, dass die Hausgeräteplatte eine Thermoschockbeständigkeit von zumindest 300 K aufweist. Darunter, dass die Hausgeräteplatte eine "Thermoschockbeständigkeit von zumindest 300 K aufweist", soll insbesondere verstanden werden, dass die Hausgeräteplatte dazu ausgelegt ist, einer kurzzeitigen Temperaturschwankung von zumindest 300 K und insbesondere von wenigstens 400 K zu widerstehen. Unter einer "kurzzeitigen Temperaturschwankung" soll insbesondere eine Temperaturschwankung mit einer Zeitdauer von höchstens 2 s, insbesondere von maximal 1 s, vorzugsweise von höchstens 0,5 und besonders vorteilhaft von maximal 0,1 s verstanden werden. Hierdurch kann eine zuverlässige Funktion der Hausgeräteplatte gewährleistet werden. Ferner kann ein Einsatz der Hausgeräteplatte als Kochfeldplatte ermöglicht werden.

In einer weiteren Ausgestaltung der Erfindung wird vorgeschlagen, dass die Hausgerätevorrichtung eine Schutzschicht umfasst, die die Hausgeräteplatte zumindest teilweise umgibt. Unter einer "Schutzschicht" soll insbesondere eine Schicht verstanden werden, die dazu vorgesehen ist, einen Schutz der Hausgeräteplatte vor mechanischer Belastung, insbesondere einem Abrieb, und/oder chemischer Belastung, insbesondere einer Korrosion und/oder einer Einwirkung von Lösungs- und/oder Reinigungsmitteln, bereitzustellen. Insbesondere verfügt die Schutzschicht über eine höhere mechanische und/oder chemische Beständigkeit als die Hausgeräteplatte. Vorzugsweise ist die Schutzschicht des Weiteren dazu vorgesehen, eine Oberflächenrauigkeit der Hausgeräteplatte auszugleichen. Darunter, dass "eine Schutzschicht die Hausgeräteplatte zumindest teilweise umgibt", soll insbesondere verstanden werden, dass die Schutzschicht zumindest teilweise an einer Außenoberfläche der Hausgeräteplatte angeordnet ist. Unter einer "Außenoberfläche" soll insbesondere eine Oberfläche verstanden werden, die von zumindest einem von einem Schwerpunkt der Hausgeräteplatte ausgehenden Strahl durchstoßen wird, wobei der Strahl an einem Durchstoßungspunkt die Hausgeräteplatte endgültig verlässt. Vorzugsweise ist die Schutzschicht eine Glasemaille. Hierdurch kann ein wirksamer Schutz der Hausgeräteplatte bereitgestellt werden. Ferner kann eine Oberfläche der Hausgeräteplatte geglättet werden, wodurch die Hausgeräteplatte einerseits eine optische Aufwertung erfahren kann und andererseits ein Reinigungsaufwand reduziert werden kann.

Ferner wird ein Hausgerät, insbesondere ein Induktionskochfeld, mit einer erfindungsgemäßen Hausgerätevorrichtung vorgeschlagen. Generell kann die Hausgeräteplatte in allen dem Fachmann als sinnvoll erscheinenden Hausgeräten eingesetzt werden, insbesondere jedoch in Induktionskochfeldern, Backöfen, Geschirrspülmaschinen und in Kühlschränken. Ferner ist ein Einsatz als thermoschockbeständige Küchenarbeitsplatte denkbar.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Induktionskochfeld mit einer eine Kochfeldplatte umfassenden Hausgerätevorrichtung in einer Draufsicht,
- Fig. 2: die Hausgerätevorrichtung in einer nicht maßstabsgetreuen Schnittdarstellung entlang einer Linie II-II in Fig. 1 und
- Fig. 3: ein Ablaufdiagramm eines Verfahrens zu einer Herstellung der Kochfeldplatte.

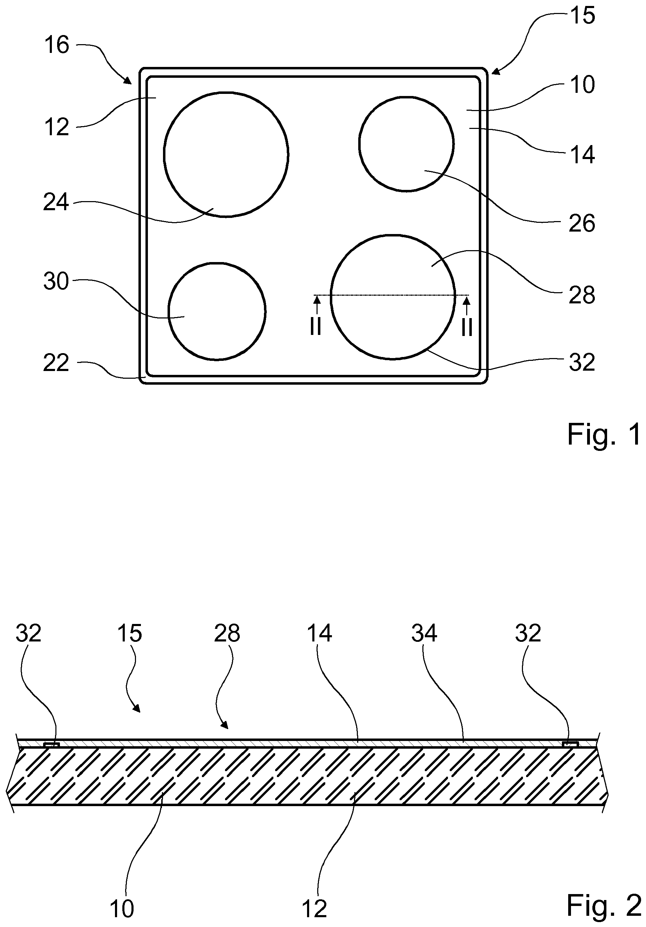

Fig. 1 zeigt ein als Induktionskochfeld 16 ausgestaltetes Hausgerät mit einer erfindungsgemäßen Hausgerätevorrichtung 15. Die Hausgerätevorrichtung 15 umfasst eine als Kochfeldplatte 12 ausgeführte Hausgeräteplatte 10. Die Kochfeldplatte 12 ist in einem Rahmen 22 des Induktionskochfelds 16 gehalten. Auf der Kochfeldplatte 12 sind in bekannter Weise vier Heizzonen 24, 26, 28, 30 mittels einer Bedruckung 32 markiert, die in einem betriebsbereiten Zustand des Induktionskochfelds 16 zu einem Aufstellen von Gargeschirr vorgesehen sind. Jeder der Heizzonen 24, 26, 28, 30 ist unterhalb der Kochfeldplatte 12 ein Induktionsheizelement zugeordnet (nicht dargestellt). Die Kochfeldplatte 12 besteht aus einem auf Cordierit basierenden synthetischen Aluminium-Magnesium-Silikat. Die Kochfeldplatte 12 weist mit einem Massenanteil von 12% bis 16% Magnesiumoxid, mit einem Massenanteil von 30% bis 35% Aluminiumoxid und mit einem Massenanteil von 52% bis 57% Siliciumdioxid auf. Die Kochfeldplatte 12 besteht zu einem wesentlichen Teil aus einer Cordierit-Kristallphase. Die Kochfeldplatte 12 weist eine Dichte von 1,8 g/cm³ bis 2,4 g/cm³ auf. Die Kochfeldplatte 12 weist eine Biegefestigkeit von 29 MPa bis 69 MPa auf. Die Kochfeldplatte 12 weist in einem Temperaturbereich von 25°C bis 300°C einen mittleren thermischen Ausdehnungskoeffizienten von 0,46×10⁻⁶ K⁻¹ bis 7,61×10⁻⁶ K⁻¹ auf. Die Kochfeldplatte 12 weist in einem Temperaturbereich oberhalb von 300°C bis 800°C einen mittleren thermischen Ausdehnungskoeffizienten von 2,34×10⁻⁶ K⁻¹ bis 6,90×10⁻⁶ K⁻¹ auf. Die Kochfeldplatte 12 weist eine Thermoschockbeständigkeit von zumindest 400 K auf.

Fig. 2 zeigt einen Teilbereich der Hausgerätevorrichtung 15 in einer nicht maßstabsgetreuen Schnittdarstellung entlang einer Linie II-II in Fig. 1. Die Kochfeldplatte 12 ist auf einer der Bedruckung 32 der Heizzonen 24, 26, 28, 30 zugewandten Seite und damit auf der zu einem Aufstellen von Gargeschirr vorgesehenen Seite von einer Schutzschicht 14 bedeckt. Die Schutzschicht 14 ist eine dem Fachmann bekannte transparente Glasemaille 34. Die Glasemaille 34 sorgt für eine glatte Aufstellfläche für Gargeschirr, welche damit auch leicht zu reinigen ist. Des Weiteren schützt die Glasemaille 34 die Kochfeldplatte 12 vor einer mechanischen und/oder chemischen Einwirkung.

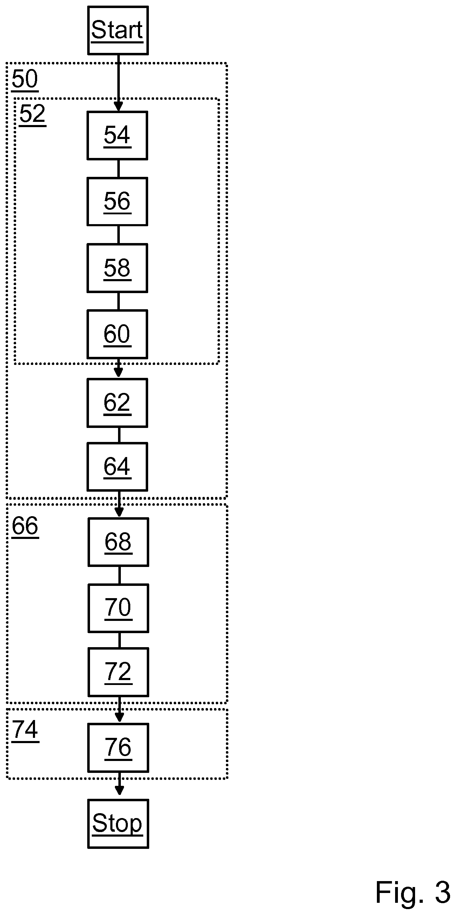

Die Kochfeldplatte 12 ist mittels eines Verfahrens hergestellt, dessen Ablaufdiagramm in Fig. 3 dargestellt ist. In einem Verfahrensabschnitt 50 wird eine Rohmasse für die Kochfeldplatte 12 hergestellt. In einem Verfahrensunterabschnitt 52 des Verfahrensabschnitts 50 wird zuerst hochreiner synthetischer Cordierit hergestellt, um für einen späteren Sintervorgang Kristallisationskeime für eine Bildung der Cordierit-Kristallphase bereitzustellen. Der Verfahrensunterabschnitt 52 beginnt mit einem Schritt 54. Im Schritt 54 werden Kaolinit mit einem Massenanteil von 70% bis 80%, Magnesiumhydroxid mit einem Massenanteil von höchstens 12%, Quarz und/oder Nanosilikate mit einem Massenanteil von 10% bis 20% und Natriumtripolyphosphat mit einem Massenanteil von 10% bis 20% vermischt. Dabei ist darauf zu achten, dass ein Massenanteil von Erdalkalimetallen höchstens 1% beträgt, um eine Bildung einer flüssigen Phase bei einer folgenden Kalzinierung zu vermeiden. Eine Korngröße der im Schritt 54 verwendeten Stoffe beträgt maximal 50 µm und vorteilhaft höchstens 20 µm. In einem Schritt 56 wird eine im Schritt 54 vorbereitete Stoffmischung gemahlen, bis eine Korngröße von 1 µm bis 5 µm erreicht ist. Darauf folgt in einem Schritt 58 eine Kalzinierung der Stoffmischung bei 1200°C bis 1400°C. Die Kalzinierung wird während einer Zeitdauer von maximal 4 h durchgeführt. Nach der Kalzinierung erhält man hochreinen synthetischen Cordierit, welcher in einem Schritt 60 erneut bis zu einer Korngröße von 1 µm bis 5 µm gemahlen wird. Hiermit endet der Verfahrensunterabschnitt 52.

In einem Schritt 62 des Verfahrensabschnitts 50 wird der hochreine synthetische Cordierit zu einer Ausgangsmischung hinzugefügt. Die Ausgangsmischung weist ferner Magnesiumsilikathydrat mit einem Massenanteil von 30% bis 50%, Kaolinit mit einem Massenanteil von 10% bis 20%, kalzinierten Kaolinit mit einem Massenanteil von höchstens 12% und reines Aluminiumoxid mit einem Massenanteil von 10% bis 20% auf. Die Ausgangsmischung weist ferner zu einer Erhöhung einer Plastizität für eine spätere Extrusion Ball Clay mit einem Massenanteil von 10% bis 20% auf. Ferner weist die Ausgangsmischung Cordierit Schamotte und Aluminiumtitanat auf. Der hochreine synthetische Cordierit, die Cordierit Schamotte und das Aluminiumtitanat machen zusammen einen Massenanteil von höchstens 15% der Ausgangsmischung aus. Ferner umfasst die Ausgangsmischung natürliche Pigmente, zum Beispiel Kupferoxid, für eine Farbgebung. Alternativ kann in der Ausgangsmischung auch auf den hochreinen synthetischen Cordierit und/oder die Cordierit Schamotte und/oder das Aluminiumtitanat und/oder auf die Pigmente verzichtet werden. In einem Schritt 64 wird die Ausgangsmischung in einer Schneckenknetmaschine geknetet, bis eine homogene Paste erreicht ist. Gegebenenfalls kann Wasser zugegeben werden, um die Plastizität der Paste zu erhöhen. Hiermit endet der Verfahrensabschnitt 50.

In einem Verfahrensabschnitt 66 wird aus der Paste eine Rohplatte der Kochfeldplatte 12 hergestellt. In einem Schritt 68 des Verfahrensabschnitts 66 wird eine Extrusion vorgenommen. Hierzu wird die Paste mittels eines Schneckenförderers durch eine formgebende Öffnung gepresst. Die formgebende Öffnung ist weitgehend rechteckig. Alternativ kann die formgebende Öffnung auch eine von einem Rechteck abweichende Form aufweisen. Insbesondere kann die formgebende Öffnung derart gestaltet sein, dass bei einer Extrusion eine Rohplatte entsteht, die einen Befestigungsflansch aufweist. Um einer Verformung der Rohplatte entgegen zu wirken, wird die Extrusion horizontal vorgenommen. Des Weiteren wird die Extrusion durch eine Evakuierung unterstützt, wodurch die Paste den ihr zur Verfügung gestellten Raum vor der formgebenden Öffnung eines Extruders vollständig ausfüllt. Durch die Extrusion wird eine Rohplatte mit einer Dicke von 4 mm hergestellt. In einem Schritt 70 wird die Rohplatte bei Raumtemperatur in Umgebungsluft während einer Zeitdauer von 24 h bis 48 h getrocknet. Zu einer restlosen Entfernung von Wasser wird die Rohplatte in einem Schritt 72 in einem Strömungsofen unter Luftatmosphäre bei 145°C während einer Zeitdauer von 36 h getrocknet. Hiermit endet der Verfahrensabschnitt 66.

In einem Verfahrensabschnitt 74 wird die Kochfeldplatte 12 fertiggestellt. In einem Schritt 76 des Verfahrensabschnitts 74 wird eine Sinterung der Rohplatte vorgenommen. Die Sinterung wird bei einer Temperatur von 1200°C bis 1400°C vorgenommen. Die Sinterung wird in Umgebungsluft vorgenommen. Die Sinterung wird während einer Zeitdauer von 2 h bis 8 h vorgenommen. Gleichzeitig mit der Sinterung findet auch eine Kalzinierung der Rohplatte statt. Während der Sinterung und Kalzinierung wird die Cordierit-Kristallphase in der Rohplatte ausgebildet. Hierdurch erhält man schließlich die Kochfeldplatte 12. Hiermit endet der Verfahrensabschnitt 74 und damit das Verfahren zur Herstellung der Kochfeldplatte 12.

Abschließend wird mittels eines Siebdruckverfahrens die Bedruckung 32 zu einer Markierung der Heizzonen 24, 26, 28, 30 auf die Kochfeldplatte 12 aufgebracht. Ferner wird die Schutzschicht 14 als Glasemaille 34 auf die zu einem Aufstellen von Gargeschirr vorgesehene Seite der Kochfeldplatte 12 aufgebracht. Alternativ kann auch die komplette Kochfeldplatte 12 mit der Schutzschicht 14 überzogen werden. Alternativ können die Bedruckung 32 und/oder die Glasemaille 34 auch vor der Sinterung im Schritt 76 auf die getrocknete Rohplatte aufgebracht werden, um dann zusammen mit der Rohplatte thermisch behandelt zu werden.

### Bezugszeichen

- 10: Hausgeräteplatte
- 12: Kochfeldplatte
- 14: Schutzschicht
- 15: Hausgerätevorrichtung
- 16: Induktionskochfeld
- 22: Rahmen
- 24: Heizzone
- 26: Heizzone
- 28: Heizzone
- 30: Heizzone
- 32: Bedruckung
- 34: Glasemaille
- 50: Verfahrensabschnitt
- 52: Verfahrensunterabschnitt
- 54: Schritt
- 56: Schritt
- 58: Schritt
- 60: Schritt
- 62: Schritt
- 64: Schritt
- 66: Verfahrensabschnitt
- 68: Schritt
- 70: Schritt
- 72: Schritt
- 74: Verfahrensabschnitt
- 76: Schritt

## Patentansprüche

1. Verfahren zur Herstellung einer Hausgeräteplatte (10) aus einer Ausgangsmischung, mit wenigstens einem Sintervorgang, **dadurch gekennzeichnet, dass** für die Ausgangsmischung zumindest Magnesiumsilikathydrat, Kaolinit, kalzinierter Kaolinit und reines Aluminiumoxid verwendet werden, wobei für die Ausgangsmischung zusätzlich hochreiner synthetischer Cordierit verwendet wird, wobei reines Aluminiumoxid Aluminiumoxid in seiner Reinform ist, wobei die Reinform eines Stoffs eine den Stoff enthaltende Stoffmischung ist, bei der der Stoff einen Massenanteil von mindestens 85% umfasst, wobei hochreiner synthetischer Cordierit künstlich hergestellter Cordierit ist, der mit einem Massenanteil von zumindest 90% eine Cordierit-Kristallphase umfasst.

2. Verfahren nach Anspruch 1, **dadurch gekennzeichnet, dass** für die Ausgangsmischung zusätzlich Ball Clay mit einem Massenanteil in einem Bereich von 10% bis 20% zu einer Erhöhung einer Plastizität verwendet wird.

3. Verfahren nach einem der vorhergehenden Ansprüche, **dadurch gekennzeichnet, dass** für die Ausgangsmischung zusätzlich Cordierit Schamotte und/oder Aluminiumtitanat und/oder Farbmittel verwendet werden.

4. Verfahren nach einem der vorhergehenden Ansprüche, **dadurch gekennzeichnet, dass** die Ausgangsmischung zu einer homogenen Paste geknetet wird.

5. Verfahren nach Anspruch 4, **dadurch gekennzeichnet, dass** die homogene Paste zu einer Rohplatte extrudiert wird.

6. Hausgerätevorrichtung mit einer Hausgeräteplatte (10), insbesondere einer Kochfeldplatte (12), die durch ein Verfahren nach einem der vorhergehenden Ansprüche hergestellt ist.

7. Hausgerätevorrichtung nach Anspruch 6, **dadurch gekennzeichnet, dass** die Hausgeräteplatte (10) einen Massenanteil von 12% bis 16% Magnesiumoxid, 30% bis 35% Aluminiumoxid und 52% bis 57% Siliciumdioxid aufweist.

8. Hausgerätevorrichtung nach Anspruch 6 oder 7, **dadurch gekennzeichnet, dass** die Hausgeräteplatte (10) zu einem wesentlichen Teil aus einer Cordierit-Kristallphase besteht.

9. Hausgerätevorrichtung nach einem der Ansprüche 6 bis 8, **dadurch gekennzeichnet, dass** die Hausgeräteplatte (10) eine Dichte zwischen 1,8 g/cm³ und 2,4 g/cm³ aufweist.

10. Hausgerätevorrichtung nach einem der Ansprüche 6 bis 9, **dadurch gekennzeichnet, dass** die Hausgeräteplatte (10) eine Thermoschockbeständigkeit von zumindest 300 K aufweist.

11. Hausgerätevorrichtung nach einem der Ansprüche 6 bis 10, **gekennzeichnet durch** eine Schutzschicht (14), die die Hausgeräteplatte (10) zumindest teilweise umgibt.

12. Hausgerät, insbesondere Induktionskochfeld, mit einer Hausgerätevorrichtung (15) nach einem der Ansprüche 6 bis 11.

## Claims

1. Method for producing a domestic appliance plate (10) from a starting mixture, with at least one sintering process, **characterised in that** at least magnesium silicate hydrate, kaolinite, calcined kaolinite and pure aluminium oxide are used for the starting mixture, wherein high-purity synthetic cordierite is additionally used for the starting mixture, wherein pure aluminium oxide is aluminium oxide in its pure form, wherein the pure form of a material is a substance mixture containing the material, in which the material comprises a mass fraction of at least 85%, wherein high-purity synthetic cordierite is artificially produced cordierite, which comprises a cordierite crystal phase with a mass fraction of at least 90%.

2. Method according to claim 1, **characterised in that** ball clay with a mass fraction in a range of 10% to 20% is also used for the starting mixture in order to increase plasticity.

3. Method according to one of the preceding claims, **characterised in that** fireclay cordierite and/or aluminium titanate and/or colouring agents are also used for the starting mixture.

4. Method according to one of the preceding claims, **characterised in that** the starting mixture is kneaded to a homogeneous paste.

5. Method according to claim 4, **characterised in that** the homogeneous paste is extruded as a green sheet.

6. Domestic appliance device having a domestic appliance plate (10), in particular a hob plate (12), produced by a method according to one of the preceding claims.

7. Domestic appliance device according to claim 6, **characterised in that** the domestic appliance plate (10) has a mass fraction of 12% to 16% magnesium oxide, 30% to 35% aluminium oxide and 52% to 57% silicon dioxide.

8. Domestic appliance device according to claim 6 or 7, **characterised in that** a substantial part of the domestic appliance plate (10) comprises a cordierite crystal phase.

9. Domestic appliance device according to one of claims 6 to 8, **characterised in that** the domestic appliance plate (10) has a density between 1.8 g/cm³ and 2.4 g/cm³.

10. Domestic appliance device according to one of claims 6 to 9, **characterised in that** the domestic appliance plate (10) has a thermal shock resistance of at least 300 K.

11. Domestic appliance device according to one of claims 6 to 10, **characterised by** a protective layer (14), surrounding the domestic appliance plate (10) at least partially.

12. Domestic appliance, in particular an induction hob plate, having a domestic appliance device (15) according to one of claims 6 to 11.

## Revendications

1. Procédé de fabrication d'une plaque d'appareil ménager (10) à partir d'un mélange initial, comprenant au moins une opération de frittage, **caractérisé en ce que** pour constituer le mélange initial, on utilise au moins du silicate de magnésium hydraté, de la kaolinite, de la kaolinite calcinée et de l'oxyde d'aluminium pur, et dans lequel on utilise en plus de la cordiérite synthétique de haute pureté pour le mélange initial, l'oxyde d'aluminium étant dans une forme pure, en ce sens que la forme pure d'une substance est un mélange de substances contenant ladite substance en une proportion d'au moins 85 % en poids, et la cordiérite synthétique de haute pureté étant de la cordiérite fabriquée artificiellement qui contient une phase cristalline de cordiérite dans une proportion en poids d'au moins 90 %.

2. Procédé selon la revendication 1, **caractérisé en ce que**, pour constituer le mélange initial, on utilise en plus de l'argile plastique dans une proportion en poids de 10 % à 20 % pour augmenter la plasticité.

3. Procédé selon l'une quelconque des revendications précédentes, **caractérisé en ce que**, pour constituer le mélange initial, on utilise en plus de la chamotte de cordiérite et/ou du titanate d'aluminium et/ou des colorants.

4. Procédé selon l'une quelconque des revendications précédentes, **caractérisé en ce que** le mélange initial est pétri pour former une pâte homogène.

5. Procédé selon l'une quelconque des revendications précédentes, **caractérisé en ce que** la pâte homogène est extrudée pour former une plaque brute.

6. Dispositif d'appareil ménager comprenant une plaque d'appareil ménager (10), notamment une plaque de cuisson (12), qui est fabriquée par un procédé selon l'une quelconque des revendications précédentes.

7. Dispositif d'appareil ménager selon la revendication 6, **caractérisé en ce que** la plaque d'appareil ménager (10) comprend une proportion en poids de 12 % à 16 % d'oxyde de magnésium, de 30 % à 35 % d'oxyde d'aluminium et de 52 % à 57 % de dioxyde de silicium.

8. Dispositif d'appareil ménager selon la revendication 6 ou 7, **caractérisé en ce que** la plaque d'appareil ménager (10) est composée essentiellement d'une phase cristalline de cordiérite.

9. Dispositif d'appareil ménager selon l'une quelconque des revendications 6 à 8, **caractérisé en ce que** la plaque d'appareil ménager (10) a une densité comprise entre 1,8 g/cm³ et 2,4 g/cm³.

10. Dispositif d'appareil ménager selon l'une quelconque des revendications 6 à 9, **caractérisé en ce que** la plaque d'appareil ménager (10) présente une résistance aux chocs thermiques d'au moins 300 K.

11. Dispositif d'appareil ménager selon l'une quelconque des revendications 6 à 10, **caractérisé en ce que** la plaque d'appareil ménager (10) comprend une couche de protection (14) qui l'entoure au moins en partie.

12. Appareil ménager, notamment plaque de cuisson à induction, comprenant un dispositif d'appareil ménager (15) selon l'une quelconque des revendications 6 à 11.
